# EUROPEAN PATENT SPECIFICATION

(11) **EP 1 994 589 B1**
(45) Date of publication and mention of the grant of the patent: **12.05.2010**
(21) Application number: 07701793.7
(22) Date of filing: 16.02.2007
(51) Int. Cl.: H01M 4/73, B21D 28/26, B21D 28/36, B21F 1/00, H01M 10/06, H01M 4/20

(54) **METHOD AND APPARATUS FOR CONTINUOUS MANUFACTURE OF BATTERY GRIDS**
VERFAHREN UND VORRICHTUNG ZUR KONTINUIERLICHEN HERSTELLUNG VON BATTERIENETZEN
PROCEDE ET APPAREIL DE FABRICATION CONTINUE DE GRILLES DE BATTERIE

(30) Priority: 22.02.2006 US 775340 P
(43) Date of publication of application: 26.11.2008
(73) Proprietor: Teck Metals Ltd., Vancouver, BC V6C 0B3 (CA)
(72) Inventor: VINCZE, Albert M., Oakville, Ontario L6H 3k2 (CA); MARLOW, John V., Oakville, Ontario L6H 6S3 (CA)
(74) Representative: LOUIS, PÖHLAU, LOHRENTZ
(86) International application number: PCT/CA2007/000244
(87) International publication number: WO 2007/095725

(56) References cited:
- WO-A1-2005/087454
- WO-A1-2006/127575
- JP-A- 57 132 672
- JP-A- 62 214 835
- US-A- 4 271 245
- US-A- 4 271 245
- US-A- 4 291 443
- US-B2- 6 691 386
- US-B2- 6 953 641

## Description

### BACKGROUND OF THE INVENTION

### (i) Field of the Invention

This invention relates to the production of battery grids and, more particularly, relates to a method and apparatus for forming an array of holes in deformable strips such as lead strip, such as by continuous punching, for the production of lead or lead alloy grids having grid wires bent out of plane for enhanced paste retention characteristics for use in the manufacture of lead-acid batteries.

### (ii) Description of the Related Art

The prior art discloses rotary methods for expanding lead strip for use in the manufacture of battery plates. Such methods employ clusters of tools arranged sequentially for preforming and slitting the strip in a first step and completion of slitting of the strip in a second step. Sequential methods have the inherent problems of synchronization of steps, such as roll-to-roll synchronization, requiring certain registering and tracking considerations.

Wires and nodes on opposite sides of expanded strip produced by the stretching and forming according to the prior art are not uniform and are not symmetrical. The profile and shape on one side is not the mirror image of the other side resulting in a number of imperfections and defects. This becomes even more significant when higher elongation targets are desired in order to produce lighter grid electrodes for batteries.

Cominco U.S. Patent No. 4,291,443 issued September 29, 1981 and U.S. Patent No. 4,315,356 issued February 16, 1982, disclose the geometric relationship of conventional 3-shaft cluster tooling or spaced-apart roll pairs employing two sequential steps, i.e. preforming, wherein the lead strip is slit and stretched to form wires that are still solidly connected and not in a form to be pulled apart, and slitting, wherein alternate slits in the nodes are made to allow subsequent expansion to complete the process.

Cominco U.S. Patent No. 4,297,866 issued November 3, 1981, discloses a sequential two-step process for the production of symmetrical slit wires deformed out of the plane of the strip having a trailing portion of the wire longer than the leading portion for improved stretchability of the wires.

Teck Cominco U.S. Patent No. 6,691,386 issued February 19, 2004, discloses a one-step process which overcomes the aforementioned problems of synchronization of steps and related imperfections and defects.

Battery grids produced by slitting and expansion of strip to form expanded metal mesh provide enhanced battery paste retention due to inherent twisting of grid wires.

The production of battery grids from continuous strip by punching of holes is an alternative to slitting and expansion of strip, but problems have been encountered in multi-stage punching to produce a grid having closely-spaced holes or spaces defining a lattice structure comprised of grid wires intersecting at nodes.

Conventional non-rotary punching of strip for the production of mesh for battery grids has addressed the problem of punching many closely spaced, small holes. The successful methods employ a reciprocating punch that stamps one large section of grid at a time, and then indexes the defonnable strip downstream before stamping another section of the grid. This segmented approach is production-rate limiting and is relatively slow compared to rotary punching because the process is stop-and-go as opposed to continuous. These reciprocating punch presses must be robust and powerful to punch metal and the constant change in momentum due to machine oscillation creates problems with noise, precision and vibration. Indexing the strip between punches can also result in imprecision of hole placement between one set of punched holes and the next.

Indexing also has a down-stream effect on the production of mesh from lead strip because it causes a jerky motion in the movement of the lead strip. This can possibly damage the lead mesh or make it difficult to smoothly integrate the mesh into the next phase of processing.

Rotating punches that have been applied to the metal industry often rely on the shearability of a metals like steel and aluminium which do not deform plastically as much as lead and other soft materials. Even when using steel and aluminium, these rotary punches often leave burs and unclean or ragged cuts, which can result in an unacceptable accumulation of errors.

U.S. Patent No. 7,066,066 issued June 27, 2006 to Teck Cominco Metals Ltd., discloses a method and apparatus for continuous, high-speed production of punched strip for forming a grid having grid wires for battery grids of lead-acid storage batteries. The grid wires form a rectangular lattice structure having a plurality of equispaced longitudinal grid wires parallel to the long axis of the strip and a plurality of equispaced transverse grid wires intersecting at nodes. The highly effective rectangular structure, is particularly well-suited for continuous, high-speed production by rotary punching compared to cast and linear production methods.

It is an object of the present invention therefore to provide a method and apparatus for continuous punching of deformable strip at high speed to produce a punched grid having a high tolerance, closely spaced array of holes and a grid having grid wires bent out of the plane of the grid for enhanced paste retention. It is another object of the invention to provide two-stage rotary punch apparatus which is self-indexing for high speed production of a uniformly punched grid. Another object of the invention is the provision of a rotary punching and grid wire bending machine for producing battery grids for lead-acid batteries.

Increased electrical current collection capability and increased tensile strength from the bottom to the top of each grid lattice for use as a battery plate, in proximity to the plate tab, and improved corrosion resistance are desirable battery plate characteristics. U.S. Patent No. 6,797,403 issued September 28, 2004 to Teck Cominco Metals Ltd. discloses a method of producing lead alloy strip for fabrication of positive and negative electrodes of a lead-acid battery by extruding a lead alloy at elevated temperature to produce a lead alloy strip having a desired profile and rapidly cooling the extruded strip to acquire a desired microstructure. Battery grids produced by extrusion from lead alloy strip have reduced vertical growth and enhanced resistance to corrosion, good electrical conductivity and with desired profiles such as tapered, thin and lightweight profiles. It is a further object of the present invention therefore to provide a grid lattice structure for battery plates with a controlled profile including tapered profiles and lightweight and thin profiles having enhanced electrical current collection capability, increased structural strength and corrosion resistance, which can be produced such as by extrusion followed by high-speed rotary punching.

A preferred direction in the battery industry is to provide battery grids which are thinner and lighter in weight, while maintaining strength and electrical conductivity with enhanced paste retention. It is an object of the invention therefore to provide thin, lightweight battery grids produced from continuously cast, extruded or rolled strip having enhanced paste adhesion and retention.

Paste retention is a major problem in battery grids produced by punching of strip. It is therefore a principal object of the present invention to provide a punched grid array of closely-spaced holes which has a grid lattice which projects out of the plane of the grid to enhance paste retention.

### Summary of the Invention

In its broad aspect, the method of the present invention for making battery grids for supporting battery paste comprises providing a length of lead or lead alloy strip having a width defined by a pair of equispaced side edges; forming an elongated array of closely-spaced holes in the strip defining a grid having a plurality of equispaced longitudinal grid wires parallel to the strip side edges across at least a portion of the width of the lead alloy strip and a plurality of transverse grid wires extending across the grid from one side to the other side of the grid intersecting the longitudinal grid wires at nodes, and bending the grid wires intermediate the nodes out of the plane of the grid for enhanced paste retention to the grid. The transverse grid wires are bent out of the plane of the grid, preferably symmetrically about the plane of the grid, in proximity to the grid sides and in proximity to the nodes. Alternating transverse grid wires can be bent in opposite directions out of the plane of the grid along the length of the grid, across the width of the grid, or along the length of the grid and across the width of the grid. The transverse grid wires are bent out of the plane of the grid at least 0.1 millimetre, up to the thickness of the grid, from each side of the grid, at an angle of at least about 5° to the plane of the grid, preferably at an angle of about 5° to 45° and more preferably at an angle of 15° to 35° to the plane of the grid.

The array of closely-spaced holes are formed in the strip such as by punching strip material out of the lead alloy strip by a first pair of opposed rotary dies consisting of a female die and a male/female die and a second pair of opposed rotary dies consisting of a said male/female die and a male die comprising continuously feeding the length of strip to the first pair of opposed rotary dies for punching a first set of closely-spaced holes transversely of the strip along the strip, continuously feeding the strip to the second pair of dies for punching a second set of holes in the strip between the first set of holes defining the grid having grid wires, the strip being wrapped about the common male/female die during punching of the first and second sets of holes to continuously index the strip with the two opposed pairs of rotary dies to ensure production of higher-tolerance closely-spaced holes, and bending the grid wires out of the plane of the grid.

The transverse grid wires are bent out of the plane of the grid, preferably symmetrically, by passing the strip through a pair of opposed rolls having angularly-spaced alternating projections and recesses of one roll for mating with angularly-spaced alternating recesses and projections of the other roll, whereby the transverse grid wires are displaced into the recesses of the rolls for bending of the transverse grid wires out of the plane of the grid. The transverse grid wires are bent symmetrically out of the plane of the grid in proximity to the grid side edges and in proximity to the nodes along the length of the lead alloy strip, across the width of the lead alloy strip, or along the length of the grid and across the width of the grid.

A lug is formed in the strip adjacent one side of the grid and the grid may be tapered from a longitudinal side edge remote from the lug towards the lug whereby electrical conductivity in the grid is enhanced in proximity to the lug. In another embodiment, the grid has thickened longitudinal edges or transverse grid wires may have an increasing width from the longitudinal edge remote from the lug towards the lug.

In another aspect of the invention, the method of the invention relates to a method of making battery plates comprising providing a length of lead alloy strip having a width defined by a pair of equispaced side edges; forming equispaced elongated arrays of closely-spaced holes in the strip defining grids having a plurality of equispaced longitudinal grid wires parallel to the side edges across at least a portion of the width of the lead alloy strip and a plurality of transverse grid wires extending across the grid and intersecting the longitudinal grid wires at nodes, and bending the grid wires intennediate the nodes out of the plane of the grid for enhanced paste retention to the grid; applying paste to the grids formed in the lead alloy strip, and cutting the pasted strip to form pasted battery plates. Preferably, a pair of elongated parallel arrays of closely-spaced holes are formed in the strip, each array of holes defining a said grid in proximity to a strip side edge separated from an adjacent grid by a longitudinal, central blank section, forming grid lugs in the central blank section, applying paste to the grids, and severing the pasted grids into battery plates.

### Brief Description of the Drawings

These and other objects of the invention can be attained by the method and apparatus of the invention illustrated in the accompanying drawings, in which:
- Figure 1: is a perspective view of a first embodiment of a battery grid of the present invention;
- Figure 2: is a front plan view thereof;
- Figure 3: is a rear plan view thereof;
- Figure 4: is an end elevational view thereof;
- Figure 5: is a top view thereof;
- Figure 6: is a bottom view thereof;
- Figure 7: is an opposite end view of Figure 4;
- Figure 8: is a perspective view of another embodiment of the battery grid of the invention;
- Figure 9: is an enlarged view of a portion of the embodiment shown in Figure 8;
- Figure 10: is an enlarged view of a portion of further embodiment;
- Figure 11: is an enlarged view of a portion of an elliptical embodiment of the invention;
- Figure 12: is an end view of another embodiment having a uniformly thick cross-section;
- Figure 13: is an end view of a further embodiment having thick top and bottom sections with a thin lightweight central section;
- Figure 14: is an end view of a still further embodiment having a tapered cross-section;
- Figure 15: is a flowsheet showing the steps of the method of the present invention;
- Figure 16: is a side elevation of a two-stage, indexed, rotary punching assembly;
- Figure 17: is an enlarged side elevation of the assembly shown in Figure 16,
- Figure 18: is a side schematic view of the assembly shown in Figures 16 and 17 in series with a grid wire bender of the invention;
- Figure 19: is a perspective view, partly cut away, of the grid wire bender of the invention;
- Figure 20: is a perspective view depicting an opened wire bender illustrating alternating projections and recesses for forming the embodiment of grid shown in Figures 1 - 7;
- Figure 21: is an exploded front view, partly cut away, of opposed rolls having mating projections and recesses of the embodiment illustrated in Figure 22;
- Figure 22: is a perspective view of a further embodiment of a battery grid of the invention;
- Figure 23: is a perspective view of another embodiment of the battery grid of the invention;
- Figure 24: is a vertical section of the battery grid taken along line 24-24 of Figure 22;
- Figure 25: is an end elevation of the battery grid of Figure 22; and
- Figure 26: is an end elevation of the battery grid of Figure 23.

### Description of the Preferred Embodiments

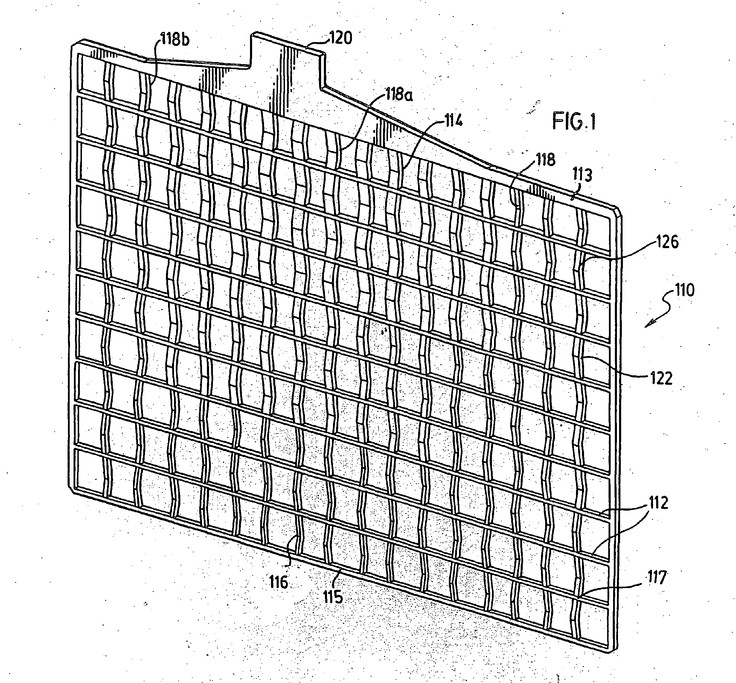

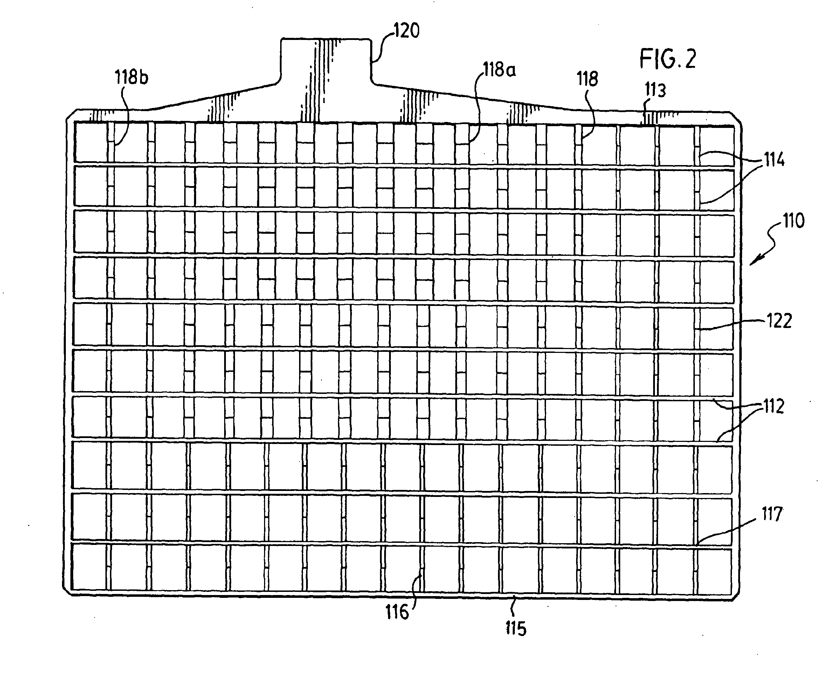

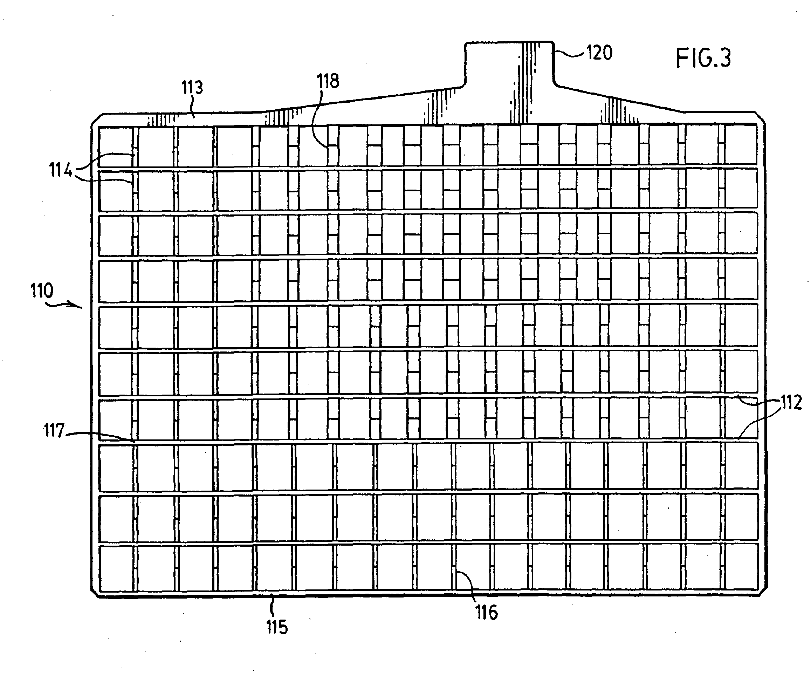

With reference first to Figures 1-14, various embodiments of battery grids of the invention are illustrated. Figures 1 - 7 show a battery grid 110 having horizontal (longitudinal) grid wires 112 of uniform width and transverse grid wires 114 having the width increase from the bottom grid wire 116 to the top grid wire 118. The transverse wires 118a at the centre portion of the grid 110 have a greater width than the transverse wires 118b towards the perimeter of the grid for enhanced electrical collection and transfer from the bottom of the grid 116 to lug 120. Transverse grid wires 118, 118a, 118b are bent symmetrically out of the plane of the grid 110 as shown most clearly in Figures 1 and 4 - 7. Each of transverse wire 118, 118a, 118b has a V-shaped middle portion 122 bent at the top and bottom side edges 113, 115 and at the nodes 117 at longitudinal grid wires 112 out of the plane of the grid to enhance battery paste retention.

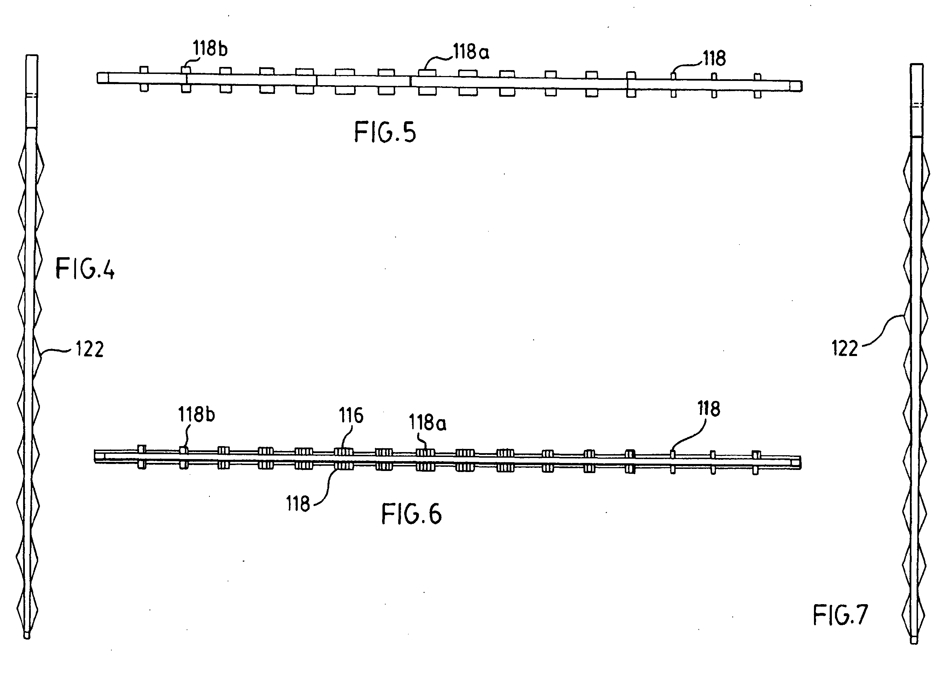

Figures 4 - 7 also illustrate transverse wires 118, 118a, 118b having a taper in thickness increasing from the bottom wire 116 to the top wire 118 of the grid to complement the electrical gathering properties of the transverse wires of the grid.

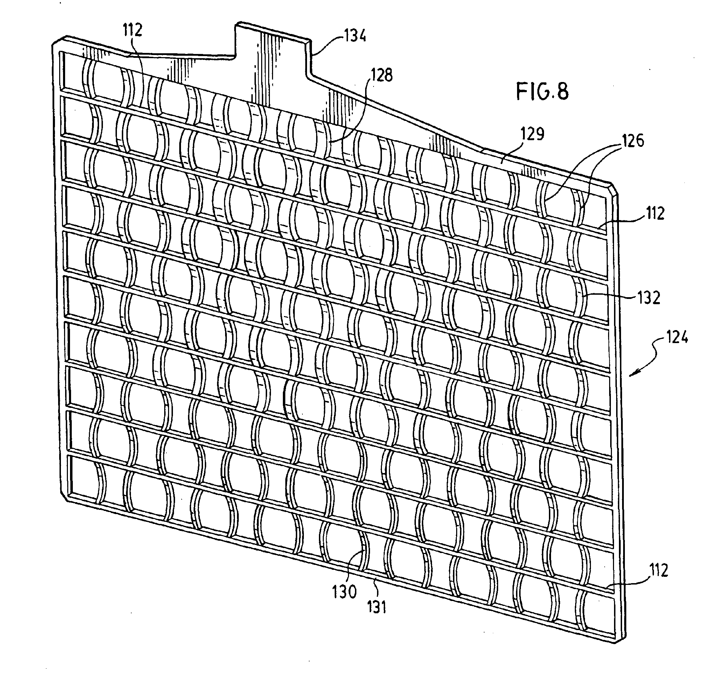

Figure 8 illustrates a battery grid 124 having curved transverse wire 126 bent symmetrically out of the plane of the grid, transverse grid wires 128 at the upper central portion of the grid having an increased width compared to the bottom transverse wires 130 and side transverse wires 132 for enhanced electrical conductivity to the lug 134. Transverse grid wires 128 and 130 are bent out of the plane of the grid at longitudinal side edges 129 and 131 respectively and at the nodes 133 at longitudinal grid wires 112.

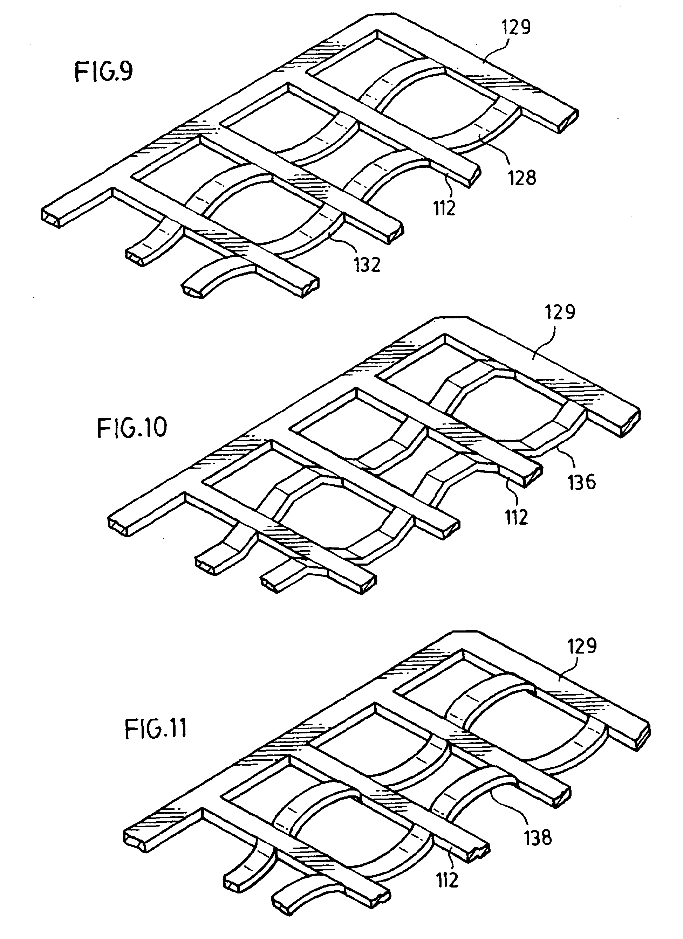

Figure 9 illustrates a portion of the curved wires 132 of the grid of Figure 8, Figure 10 illustrates a portion of a grid having double-bent wires 136, and Figure 11 illustrates elliptical bent transverse wires 138, all bent symmetrically out of the plane of both sides of the grid.

Alternating transverse grid wires illustrated in Figures 8 and 9, 10 and 11 are bent in opposite directions out of the plane of the grid along the length of the grid and across the width of the grid.

Although Figures 1 - 11 show planar longitudinal wires 112, it is understood wires 112 may be bent out of the plane of the grid for paste retention.

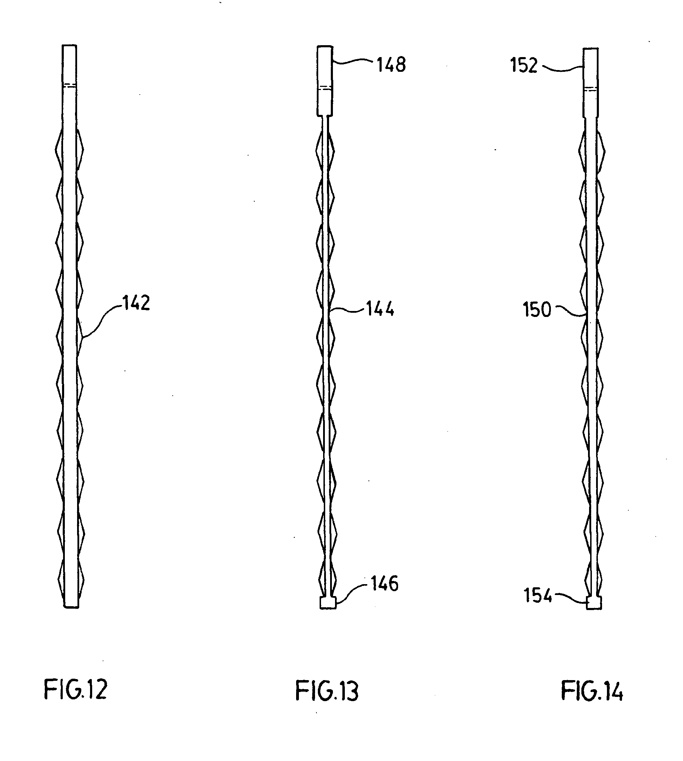

Figure 12 illustrates a grid having uniformly thick transverse wires 142. Figure 13 illustrates a lightweight grid having uniformly thin transverse wires 144, with the bottom edge 146 and top edge 148 thickened. Figure 14 shows a tapered battery grid having thickened top 152 and bottom edge 154 with wires increasing in thickness from the bottom to the top of the grid.

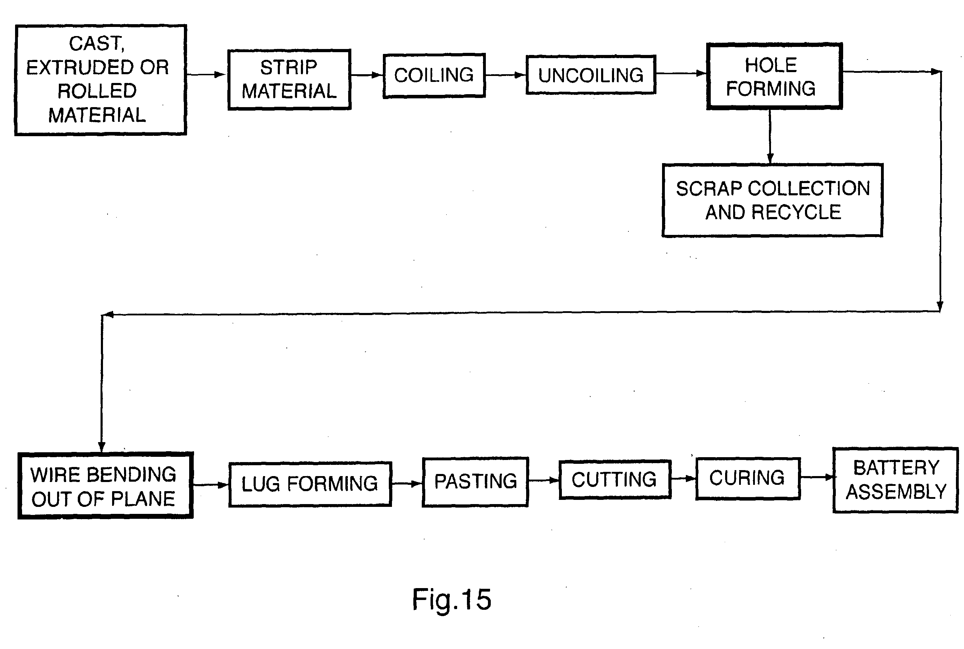

With reference now to Figure 15, the flowsheet illustrates the method steps of the invention. Cast, extruded or rolled lead or lead alloy strip material, usually coiled, is fed to the hole forming assembly and parallel sets or arrays of grids are formed, such as by punching, along the length of the grid with a longitudinal, central blank section remaining between the sets of grids. The hole forming step is followed by bending of the grid wires out of the plane of the grid, to be described, and forming of grid lugs in the central blank section. The separate grid strips are pasted, severed into discrete battery plates, cured and assembled into battery cases.

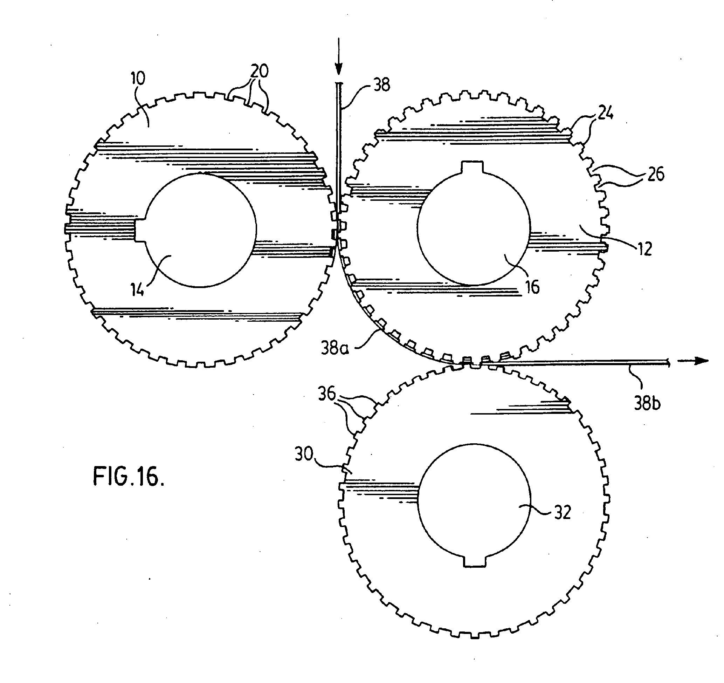

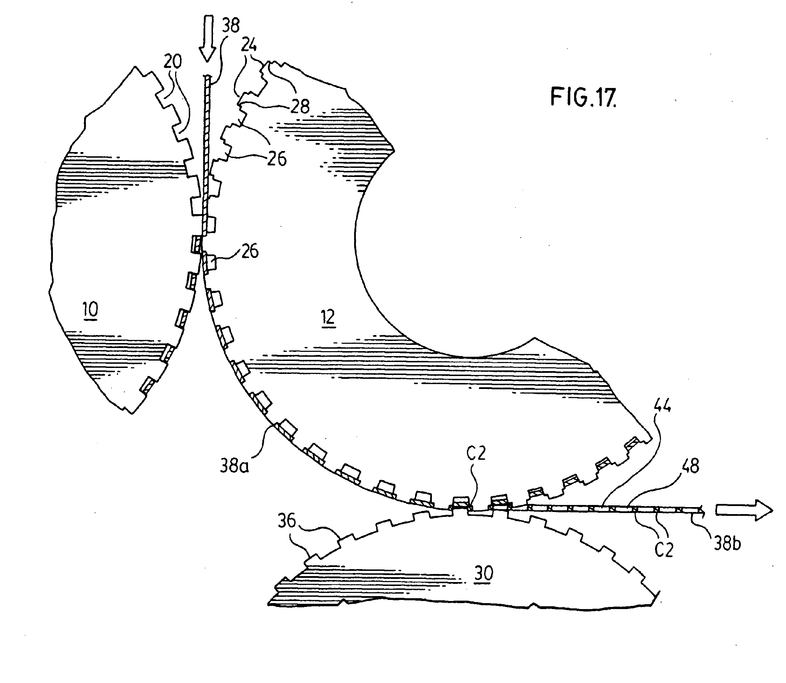

With reference to Figures 16 - 18, a rotary punching apparatus for forming arrays of closely-spaced holes in the strip comprises a first pair of opposed dies 10, 12 mounted for synchronized rotation on shafts 14, 16 respectively in a frame. Although two sets of opposed dies 10, 12 normally are mounted on common shafts and operate in unison on a strip with a longitudinal blank section remaining between two sets of grids for the subsequent forming of lugs, the description herein will proceed with reference to a single set of opposed dies. As shown more clearly in Figures 16 and 17, die 10 is a female die keyed on shaft 14 and has transverse rows of angularly equispaced recesses 20 formed on the periphery thereof. Die 12 is a male/female die keyed on drive shaft 16 having transverse rows of angularly equispaced alternating punches 24 and recesses 26 formed on the periphery thereof. Punches 24 are adapted to mate with and fit recesses 20 of die 10. Each punch 24 has a shoulder 28 formed on each side thereof between punch 24 and adjacent recess 26 for reasons which will become apparent as the description proceeds. It will be understood that one, two or more rows of punches and recesses can be used, depending on the requirements of the punched product, as shown in U.S. Patent No. 7,066,066.

Die 30 mounted for rotation on shaft 32 is a male die keyed on shaft 32 for synchronized rotation with die 12. Male die 30 has angularly equispaced transverse rows of punches 36 adapted to mate with and fit in rows of recesses 26 of die 12 between punch shoulders 28. Although recesses and punches are shown equispaced, the recesses and punches can be spaced as desired for the final product, both angularly about the periphery of the dies and transversely across the width of the dies.

Dies 10, 12 and 30 are driven by anti-lash gears mounted on shafts 14, 16 and 32 respectively.

During rotation of dies 10, 12 and 30, strip 38 guided between dies 10 and 12 is punched in a first stage by sequential insertion of transverse rows of punches 24 on die 12 into transverse rows of mating recesses 20 on die 10. Punch-out material is discharged from female die 10. The strip 38 is keyed onto male/female die12 by engagement of strip 38 between rows of punches 24 as die 12 rotates to feed strip 38a between male/female die 12 and male die 30. Strip 38a is punched in a second stage, by insertion of rows of punches 36 of male die 30 into mating recesses 26 of male/female die 12 for displacement of punch-out material into recesses 26 between punch shoulders 28 with punched strip 38b discharged from the assembly. Punch-out material is discharged from die 12.

Referring now to the enlarged view of Figures 17, punches 24 of male/female die 12 are adapted to be inserted into opposed recesses 20 of female die 10 as the dies rotate. In like manner, punches 36 of male die 30 are adapted to be inserted into opposed recesses 26 of male/female die 12 between shoulders 28 of punches 24 as the dies rotate.

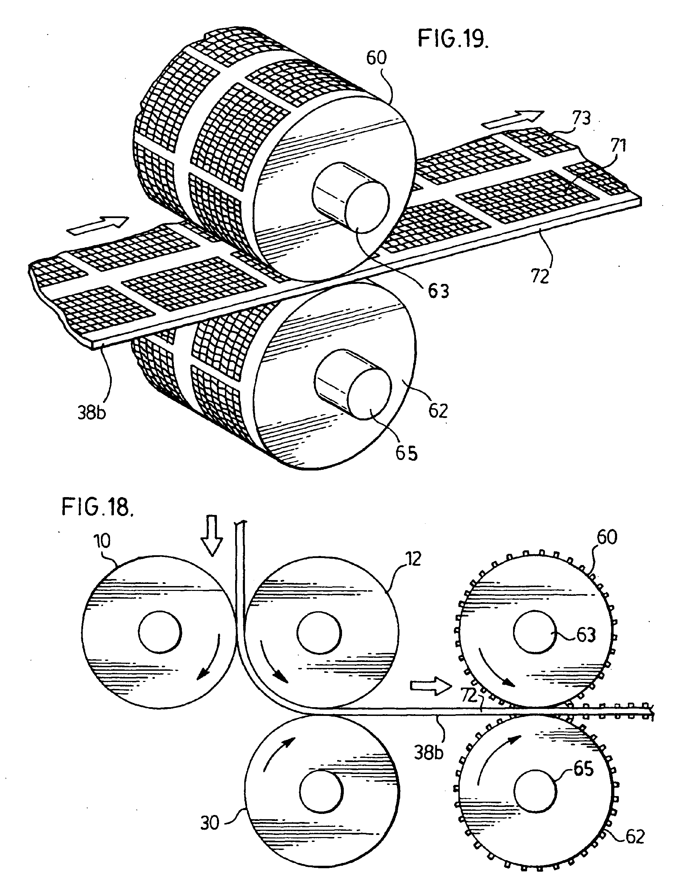

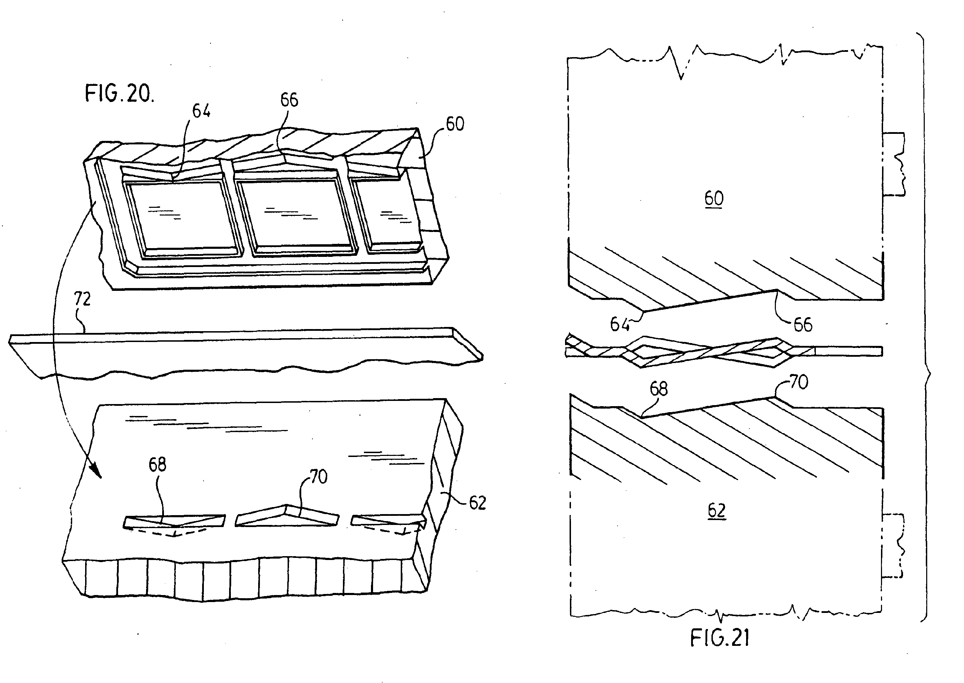

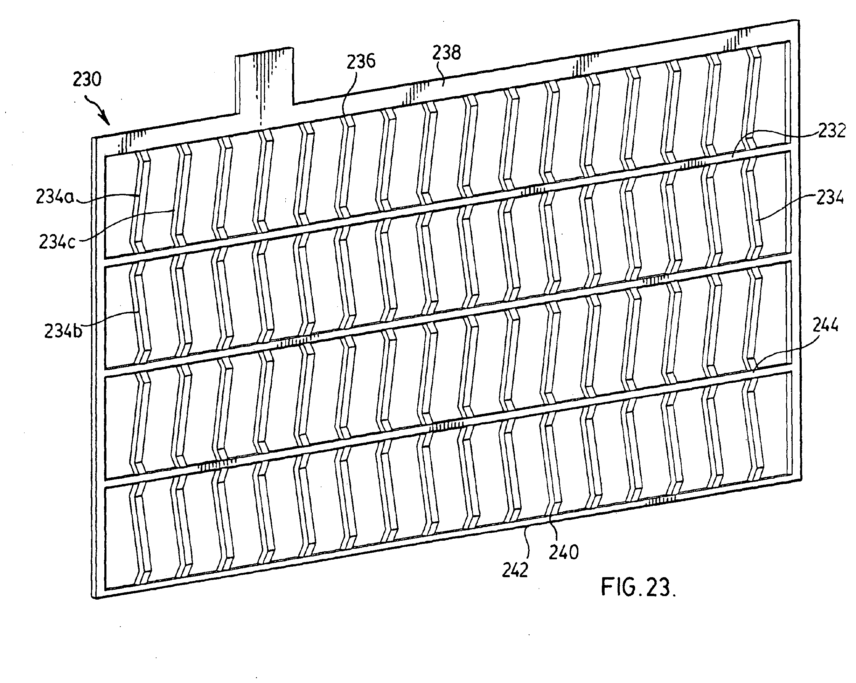

With reference to Figures 18 and 19, perforated strip 38b from opposed rolls 12, 30 passes to opposed rolls 60, 62 mounted on shafts 63, 65 respectively having angularly-spaced alternating projections 64 and recesses 66 of roll 60 mating with recess 68 and projections 70 of roll 62, shown most clearly in Figures 20 and 21, to bend the transverse grid wires 71 symmetrically out of the plane of the strip as depicted by strip 72. Opposed rolls 60, 62 bend a parallel set of grids 73, shown partly cut away for illustration purposes. Projections 64 and recesses 60 and mating recesses 68 and projections 70 are shaped to produce desired grid wire configurations as shown in Figures 1, 8, 10 - 14 and 22, 23 to be described. Alternating transverse grid wires can be bent sequentially out of the plane of both sides of the grid in opposite directions along the length of the grid, across the width of the grid, or both along the length and across the width of the grid. The angle a at which the grid wire is bent out of the plane of the grid in proximity to the nodes and the grid edges is at least 5°, preferably in the range of 5° to 45° and more preferably in the range of 15° to 35°. The grid wires project at least 0.1 millimetre out of the plane of the grid on each side of the grid, up to the thickness of the grid, for a total thickness of up to three times of the thickness of the starting grid material.

After bending the grid wires out of plane, the formed strip is passed to the lugforming step and then pasted, cut, cured and assembled into battery cases.

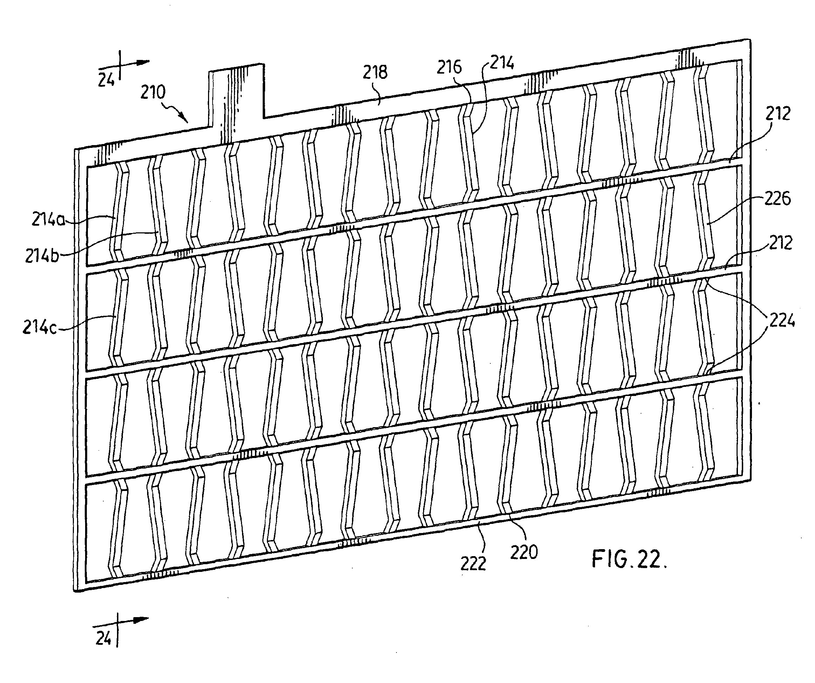

Figures 22 - 26 illustrate two preferred embodiments of grids of the present invention. Figures 22 - 24 show a battery grid 210 having longitudinal grid wires 212 and transverse grid wires 214, attached at 216 to longitudinal side edge 218, at 220 to longitudinal side edge 222, and to longitudinal wires 212 at nodes 224. Transverse wires 214 are bent in proximity to side edges 218 and 222 and at nodes 224 at an angle of about 20° to the plane of grid 210 in a preferred range of 15° to 35°, projecting about 0.4 millimetre out of the plane of the grid on each side of the grid, for a total of 1.6 millimetres for a grid having a starting thickness of 0.8 millimetre with a central connecting wire section 226 passing through the plane of the grid. Figure 22 illustrates alternating transverse grid wires 214a and 214b bent in opposite directions out of the plane of the grid along the length of the grid, and alternating grid wires 214a and 214c bent in the same direction out of the plane of the grid across the width of the grid. It will be understood that the alternating grid wires 214a and 214c across the width of the grid could also be bent in opposite direction.

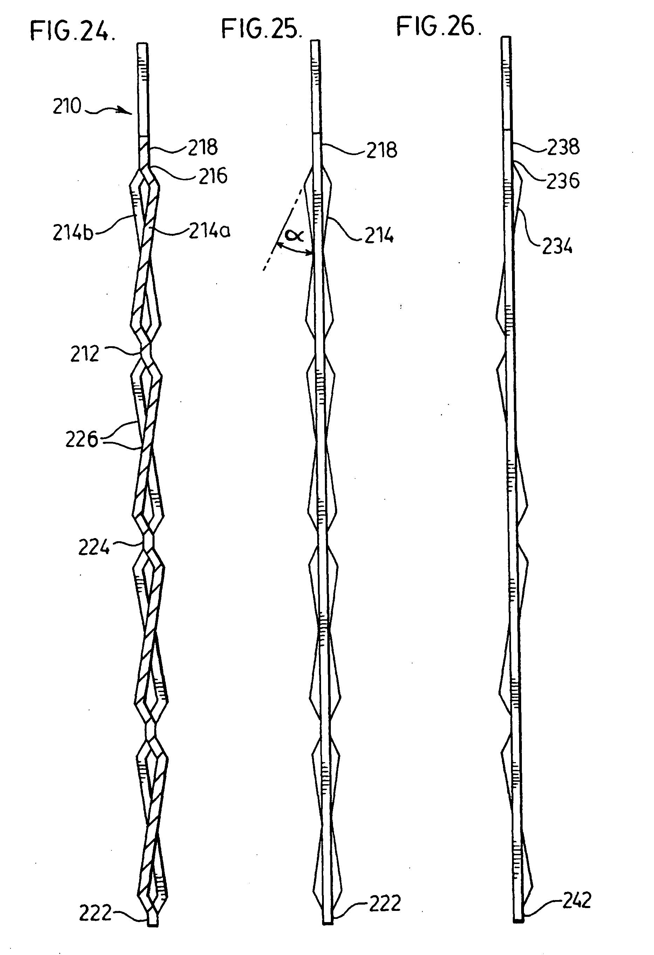

Figures 24, 25 show a battery grid 230 having longitudinal grid wires 232 and transverse grid wires 234 attached at 236 to longitudinal side edge 238, at 240 to longitudinal side edge 242, and to longitudinal wires 232 at nodes 244. Alternating transverse wires 234a and 234b are bent in opposite directions out of the plane of the grid across the width of the grid, and alternating wires 234a and 234c are bent in the same direction out of the plane of the grid along the length of the grid.

It has been found that the embodiments of Figures 22 - 25 provide good lateral resistance to deformation back into the plane of the grid during pasting. Tests conducted on 100 pairs of battery plates having the grid of Figure 22 in a commercial battery plant with cured tri-basic lead sulphate paste indicated very good adhesion after a flash cure but before the final cure. A typical paste was used in a standard positive plate production run using a Barton pot lead oxide as the starting material. Paste density was 4.1 g/cc. The grid was Pb-Ca-Sn-Ag alloy typically used in a North American SLI battery production plant.

It will be understood that other embodiments and examples of the invention will be readily apparent to a person skilled in the art, the scope of the invention being defined in the appended claims.

## Claims

1. A continuous method of making battery grids for supporting battery paste comprising:
providing a length of lead or lead alloy strip having a width defined by a pair of equispaced side edges;
forming equispaced elongated array of holes in the strip defining a grid having a plurality of equispaced longitudinal grid wires parallel to the strip side edges across at least a portion of the width of the lead or lead alloy strip and a plurality of transverse grid wires extending across the grid from one side to the other side of the grid intersecting the longitudinal grid wires at nodes, and bending the transverse grid wires intermediate the nodes out of the plane of the grid for enhanced paste retention to the grid.

2. A method as claimed in claim 1, in which the array of holes are formed in the strip by punching strip material out of the lead or lead alloy strip by a first pair of opposed rotary dies consisting of a female die and a male/female die and a second pair of opposed rotary dies consisting of said male/female die and a male die comprising continuously feeding the length of strip to the first pair of opposed rotary dies for punching a first set of holes transversely of the strip along the strip, continuously feeding the strip to the second pair of dies for punching a second set of holes in the strip between the first set of holes defining the grid having grid wires, the strip being wrapped about the common male/female die during punching of the first and second sets of holes to continuously index the strip with the two opposed pairs of rotary dies to ensure production of holes, and bending the grid wires out of the plane of the grid.

3. A method as claimed in claim 2, wherein the transverse grid wires are bent symmetrically out of the plane of the grid by passing the strip through a pair of opposed rolls having angularly-spaced alternating projections and recesses of one roll for mating with angularly-spaced alternating recesses and projections of the other roll, whereby the transverse grid wires are displaced into the recesses of the rolls for bending of the transverse grid wires out of the plane of the grid.

4. A method as claimed in claim 1, 2 or 3, wherein the transverse grid wires are bent symmetrically out of the plane of the grid in proximity to the grid side edges and in proximity to the nodes.

5. A continuous method of making battery plates comprising:
providing a length of lead or lead alloy strip having a width defined by a pair of equispaced side edges;
forming equispaced elongated arrays of holes in the strip defining grids having a plurality of equispaced longitudinal grid wires parallel to the side edges across at least a portion of the width of the lead or lead alloy strip and a plurality of transverse grid wires extending across the grid and intersecting the longitudinal grid wires at nodes, and bending the transverse grid wires intermediate the nodes out of the plane of the grid for enhanced paste retention to the grid;
applying paste to the grids formed in the lead or lead alloy strip, and
cutting the pasted strip to form pasted battery plates.

6. A method as claimed in claims 1 - 5, wherein alternating transverse grid wires are bent in opposite directions out of the plane of the grid along the length of the lead or lead alloy strip.

7. A method as claimed in claims 1 - 5, wherein alternating transverse grid wires are bent in opposite directions out of the plane of the grid across the width of the lead or lead alloy strip.

8. A method as claimed in claims 1 - 5; wherein alternating transverse grid wires are bent in opposite directions out of the plane of the grid along the length of the grid and across the width of the grid.

9. A method as claimed in claims 1 - 8, wherein the transverse grid wires are bent out of the plane of the grid at least 0.1 millimetre up to the thickness of the grid from each side of the grid for a total thickness of up to three times the thickness of the grid at an angle of about 5° to 45° to the plane of the grid.

10. A method as claimed in claim 1, wherein the strip is produced by casting, extruding or rolling lead or lead alloy and the strip has a controlled profile for producing tapered battery grids.

11. A method as claimed in claims 1 - 10, forming a lug in the strip adjacent one side of the grid, and wherein the lead or lead alloy strip is tapered from a longitudinal side edge remote from the lug towards the lug whereby electrical conductivity is enhanced in proximity to the lug.

12. A method of making battery plates as claimed in claim 5, forming a pair of elongated parallel arrays of holes in the strip, each array of holes defining a said grid in proximity to a strip side edge separated from an adjacent grid by a longitudinal, central blank section,
forming grid lugs in the central blank section,
applying paste to the grids, and
severing the pasted grids into battery plates.

13. A method as claimed in claim 12, wherein the transverse wires are bent 0.4 millimetre out of the plane of the grid from each side of the grid at an angle to the grid in the range of 15° to 35°.

14. A method as claimed in claims 1 - 13, wherein the length of lead or lead alloy strip has a central section and longitudinal side edges thickened relative to the central section.

15. A method as claimed in claims 1 - 13, wherein transverse grid wires have an increasing width from the longitudinal side edge remote from the lug towards the lug.

## Patentansprüche

1. Ununterbrochenes Verfahren zum Herstellen von Batteriegittern zum Tragen von Batteriepaste, das umfasst:
Bereitstellen eines Abschnitts eines Blei- oder Bleilegierungsstreifens mit einer Breite, die durch ein Paar gleich beabstandeter Seitenkanten definiert ist;
Formen einer gleich beabstandeten länglichen Anordnung von Löchern in dem Streifen, die ein Gitter definieren, das mehrere gleich beabstandete longitudinale Gitterdrähte parallel zu den Streifenseitenkanten über wenigstens einen Teil der Breite des Blei- oder Bleilegierungsstreifens und mehrere quer verlaufende Gitterdrähte, die sich von einer Seite zur anderen Seite des Gitters über das Gitter erstrecken und dabei die longitudinalen Gitterdrähte an Knoten schneiden, besitzt, und Biegen der quer verlaufenden Gitterdrähte zwischen den Knoten aus der Ebene des Gitters für eine verbesserte Pastenhaftung am Gitter.

2. Verfahren nach Anspruch 1, wobei die Anordnung von Löchern in dem Streifen durch Ausstanzen von Streifenmaterial des Blei- oder Bleilegierungsstreifens wenigstens durch ein erstes Paar gegenüberliegender Drehstempel, das aus einem Buchsenstempel und einem Steck-/Buchsenstempel besteht, und durch ein zweites Paar gegenüberliegender Drehstempel, das aus dem Steck-/Buchsenstempel und einem Steckstempel besteht, gebildet wird, umfassend das ununterbrochene Zuführen des Streifenabschnitts zu dem ersten Paar gegenüberliegender Drehstempel, um eine erste Gruppe von Löchern quer zu dem Streifen längs des Streifens auszustanzen, das ununterbrochene Zuführen des Streifens zu dem zweiten Paar Stempel, um eine zweite Gruppe von Löchern in dem Streifen zwischen der ersten Gruppe von Löchern auszustanzen, wodurch das Gitter mit Gitterdrähten definiert wird, wobei der Streifen während des Stanzens der ersten und der zweiten Gruppe von Löchern um den gemeinsamen Steck-/Buchsenstempel gewickelt wird, um den Streifen mit den zwei gegenüberliegenden Paaren von Drehstempeln zu indexieren, um die Produktion von Löchern sicherzustellen, und das Biegen der Gitterdrähte aus der Ebene des Gitters.

3. Verfahren nach Anspruch 2, wobei die quer verlaufenden Gitterdrähte symmetrisch aus der Ebene des Gitters gebogen werden, indem der Streifen durch ein Paar gegenüberliegender Walzen bewegt wird, die in Winkelrichtung beabstandete abwechselnde Vorsprünge und Vertiefungen auf einer Walze besitzen, die in in Winkelrichtung beabstandete abwechselnde Vertiefungen und Vorsprünge der anderen Walze passen, wodurch die quer verlaufenden Gitterdrähte in die Aussparungen der Walzen gedrängt werden, um die quer verlaufenden Gitterdrähte aus der Ebene des Gitters zu biegen.

4. Verfahren nach Anspruch 1, 2 oder 3, wobei die quer verlaufenden Gitterdrähte in der Nähe der Gitterseitenkanten und in der Nähe der Knoten symmetrisch aus der Ebene des Gitters gebogen werden.

5. Ununterbrochenes Verfahren zum Herstellen von Batterieplatten, das umfasst:
Bereitstellen eines Abschnitts eines Blei- oder Bleilegierungsstreifens mit einer Breite, die durch ein Paar gleich beabstandeter Seitenkanten definiert ist;
Formen gleich beabstandeter länglicher Anordnungen von Löchern in dem Streifen, die Gitter definieren, die mehrere gleich beabstandete longitudinale Gitterdrähte parallel zu den Seitenkanten wenigstens über einen Teil der Breite des Blei- oder Bleilegierungsstreifens und mehrere quer verlaufende Gitterdrähte, die sich über das Gitter erstrecken und die longitudinalen Gitterdrähte an Knoten schneiden, besitzen, und Biegen der quer verlaufenden Gitterdrähte zwischen den Knoten aus der Ebene des Gitters, um die Pastenhaftung am Gitter zu verbessern;
Aufbringen von Paste auf die Gitter, die in dem Blei- oder Bleilegierungsstreifen gebildet sind, und
Schneiden des mit Paste versehenen Streifens, um mit Paste versehene Batterieplatten zu bilden.

6. Verfahren nach den Ansprüchen 1-5, wobei entlang des Abschnitts des Blei- oder Bleilegierungsstreifens abwechselnde quer verlaufende Gitterdrähte in entgegengesetzten Richtungen aus der Ebene des Gitters gebogen werden.

7. Verfahren nach den Ansprüchen 1-5, wobei über die Breite des Blei- oder Bleilegierungsstreifens abwechselnde quer verlaufende Gitterdrähte in entgegengesetzten Richtungen aus der Ebene des Gitters gebogen werden.

8. Verfahren nach den Ansprüchen 1-5, wobei längs des Abschnitts des Gitters und über die Breite des Gitters abwechselnde quer verlaufende Gitterdrähte in entgegengesetzten Richtungen aus der Ebene des Gitters gebogen werden.

9. Verfahren nach den Ansprüchen 1-8, wobei die quer verlaufenden Gitterdrähte von jeder Seite um wenigstens 0,1 Millimeter bis zu der Dicke des Gitters für eine Gesamtdicke bis zur dreifachen Dicke des Gitters unter einem Winkel von etwa 5° bis etwa 45° zu der Ebene des Gitters aus der Ebene des Gitters gebogen werden.

10. Verfahren nach Anspruch 1, wobei der Streifen durch Gießen, Strangpressen oder Walzen von Blei oder einer Bleilegierung erzeugt wird und der Streifen ein gesteuertes Profil besitzt, um konische Batteriegitter zu erzeugen.

11. Verfahren nach den Ansprüchen 1-10, das eine Nase im Streifen benachbart zu einer Seite des Gitters bildet, wobei der Blei- oder Bleilegierungsstreifen von einer longitudinalen Seitenkante entfernt von der Nase zu der Nase konisch zuläuft, wobei die spezifische elektrische Leitfähigkeit in der Nähe der Nase verbessert wird.

12. Verfahren zum Herstellen von Batterieplatten nach Anspruch 5, bei dem ein Paar länglicher paralleler Anordnungen von Löchern in dem Streifen gebildet wird, wobei jede Anordnung von Löchern das Gitter in der Nähe einer Streifenseitenkante, die von einem benachbarten Gitter durch einen longitudinalen mittigen leeren Abschnitt getrennt ist, definiert,
Bilden von Gitternasen in dem mittigen leeren Abschnitt,
Aufbringen von Paste auf die Gitter und
Trennen der mit Paste versehenen Gitter in Batterieplatten.

13. Verfahren nach Anspruch 12, wobei die quer verlaufenden Drähte von jeder Seite des Gitters um 0,4 Millimeter unter einem Winkel zum Gitter im Bereich von 15° bis 35° aus der Ebene des Gitters gebogen werden.

14. Verfahren nach den Ansprüchen 1-13, wobei das Längsstück des Blei- oder Bleilegierungsstreifens einen mittigen Abschnitt und longitudinale Seitenkanten, die relativ zu dem mittigen Abschnitt verdickt sind, besitzt.

15. Verfahren nach den Ansprüchen 1-13, wobei quer verlaufende Gitterdrähte ausgehend von der longitudinalen Seitenkante entfernt von der Nase zu der Nase eine zunehmende Breite besitzen.

## Revendications

1. Procédé de fabrication en continu de grilles de batterie afin de supporter une pâte pour batterie comprenant :
la préparation d'une longueur de bande de plomb ou d'alliage de plomb présentant une largeur définie par une paire de bords latéraux équidistant ;
la formation d'une matrice allongée d'orifices équidistants sur la bande définissant une grille comportant une pluralité de fils de grille longitudinaux équidistants parallèles aux bords latéraux de bande à travers au moins une partie de la largeur de la bande de plomb ou d'alliage de plomb et une pluralité de fils de grille transversaux s'étendant à travers la grille à partir d'un premier côté vers l'autre côté de la grille coupant les fils de grille longitudinaux au niveau de noeuds, et le cintrage des fils de grille transversaux de manière intermédiaire par rapport aux noeuds hors du plan de la grille afin d'assurer une rétention de pâte améliorée sur la grille.

2. Procédé selon la revendication 1, dans lequel la matrice d'orifices est formée sur la bande par poinçonnage du matériau de bande de la bande de plomb ou d'alliage de plomb par une première paire de matrices tournantes opposées consistant en une matrice femelle et une matrice mâle/femelle et une seconde paire de matrices tournantes opposées consistant en ladite matrice mâle/femelle et une matrice mâle comprenant l'alimentation en continu de la longueur de bande sur la première paire de matrices tournantes opposées afin de poinçonner un premier ensemble d'orifices transversalement par rapport à la bande le long de la bande, l'alimentation en continu de la bande à la seconde paire de matrices afin de poinçonner un second jeu d'orifices sur la bande entre le premier ensemble d'orifices définissant la grille comportant des fils de grille, la bande étant enroulée autour de la matrice mâle/femelle commune au cours du poinçonnage des premier et second ensembles d'orifices afin d'indexer en continu la bande avec les deux paires opposées de matrices tournantes de manière à assurer la production d'orifices, et le cintrage des fils de grille hors du plan de la grille.

3. Procédé selon la revendication 2, dans lequel les fils de grille transversaux sont cintrés symétriquement hors du plan de la grille en faisant passer la bande à travers une paire de rouleaux opposés présentant des saillies et cavités alternées angulairement espacées d'un premier rouleau afin de correspondre avec des cavités et saillies alternées angulairement espacées de l'autre rouleau, de telle sorte que les fils de grille transversaux sont déplacés dans les cavités des rouleaux afin d'assurer le cintrage des fils de grille transversaux hors du plan de la grille.

4. Procédé selon la revendication 1, 2 ou 3, dans lequel les fils de grille transversaux sont cintrés symétriquement hors du plan de la grille à proximité des bords latéraux de grille et à proximité des noeuds.

5. Procédé de fabrication en continu de plaque de batterie comprenant :
la préparation d'une longueur de bande de plomb ou d'alliage de plomb présentant une largeur définie par une paire de bords latéraux équidistant ;
la formation de matrices allongées d'orifices équidistants sur la bande définissant des grilles présentant une pluralité de fils de grille longitudinaux équidistants parallèles aux bords latéraux à travers au moins une partie de la largeur de la bande de plomb ou d'alliage de plomb et une pluralité de fils de grille transversaux s'étendant à travers la grille et coupant les fils de grille longitudinaux au niveau de noeuds, et le cintrage des fils de grille transversaux de manière intermédiaire par rapport aux noeuds hors du plan de la grille afin d'assurer une rétention de pâte améliorée sur la grille ;
l'application de pâte sur les grilles formées dans la bande de plomb ou d'alliage de plomb, et
la coupe de la bande revêtue de pâte afin de former des plaques de batterie revêtues de pâte.

6. Procédé selon les revendications 1 à 5, dans lequel les fils de grille transversaux alternés sont cintrés dans des sens opposés hors du plan de la grille suivant la longueur de la bande de plomb ou d'alliage de plomb.

7. Procédé selon les revendications 1 à 5, dans lequel les fils de grille transversaux sont cintrés dans des sens opposés hors du plan de la grille à travers la largeur de la bande de plomb ou d'alliage de plomb.

8. Procédé selon les revendications 1 à 5 ; dans lequel les fils de grille transversaux alternés sont cintrés dans des sens opposés hors du plan de la grille suivant la longueur de la grille et à travers la largeur de la grille.

9. Procédé selon les revendications 1 à 8, dans lequel les fils de grille transversaux sont cintrés hors du plan de la grille d'au moins 0,1 millimètre jusqu'à l'épaisseur de la grille à partir de chaque côté de la grille pour une épaisseur totale allant jusqu'à trois fois l'épaisseur de la grille sous un angle de 5° à 45° environ par rapport au plan de la grille.

10. Procédé selon la revendication 1, dans lequel la bande est produite par moulage, extrusion ou laminage de plomb ou d'alliage de plomb et la bande présente un profil commandé afin de produire des grilles de batterie effilées.

11. Procédé selon les revendications 1 à 10, comprenant la formation d'une patte sur le premier côté adjacent à la bande de la grille, et dans lequel la bande de plomb ou d'alliage de plomb est effilée à partir d'un bord latéral longitudinal distant par rapport à la patte vers la patte de telle sorte que la conductivité électrique est améliorée à proximité de la patte.

12. Procédé de fabrication de plaques de batterie selon la revendication 5, comprenant la formation d'une paire de matrices d'orifices parallèles allongées sur la bande, chaque matrice d'orifices définissant une desdites grilles à proximité d'un bord latéral de bande séparé d'une grille adjacente par une section libre centrale longitudinale,
la formation de pattes de grille dans la section libre centrale,
l'application de pâte sur les grilles, et
la séparation des grilles enrobées de pâte en plaques de batterie.

13. Procédé selon la revendication 12, dans lequel les fils transversaux sont cintrés sur 0,4 millimètre hors du plan de la grille à partir de chaque côté de la grille sous un angle par rapport à la grille compris dans la plage de 15° à 35°.

14. Procédé selon les revendications 1 à 13, dans lequel la longueur de bande de plomb ou d'alliage de plomb présente une section centrale et des bords latéraux longitudinaux épaissis par rapport à la section centrale.

15. Procédé selon les revendications 1 à 13, dans lequel les fils de grille transversaux présentent une largeur croissante à partir du bord latéral longitudinal distant de la patte vers la patte.
